# EUROPEAN PATENT SPECIFICATION

(11) **EP 4 497 489 B1**
(45) Date of publication and mention of the grant of the patent: **15.04.2026**
(21) Application number: 24190048.9
(22) Date of filing: 22.07.2024
(51) Int. Cl.: B01D 46/02, B01D 46/24, B01D 46/42, B01D 46/58, B01D 46/71, B01D 46/04

(54) **FIXING SYSTEM FOR VALVES FOR CLEANING INDUSTRIAL FILTERS**
BEFESTIGUNGSSYSTEM FÜR VENTILE ZUR REINIGUNG VON INDUSTRIEFILTERN
SYSTÈME DE FIXATION POUR SOUPAPES DE NETTOYAGE DE FILTRES INDUSTRIELS

(30) Priority: 25.07.2023 IT 202300015567
(43) Date of publication of application: 29.01.2025
(73) Proprietor: Autel S.r.l., 41049 Sassuolo (MO) (IT)
(72) Inventor: CAMORANI, Angelo, 41049 Sassuolo (MO) (IT)
(74) Representative: Grana, Daniele

(56) References cited:
- EP-A1- 2 390 539
- EP-A1- 3 753 623
- IT-A1- 202200 000 980
- US-A- 3 757 497
- US-A1- 2005 210 842

## Description

### Technical Field

The present invention relates to a fixing system for valves for cleaning industrial filters.

### Background Art

In industrial settings, the use of special dust suppression systems for air purification has long been known.

Such systems, in actual facts, allow for the filtration of dirty air drawn from a plant by retaining dust through appropriate filtering elements.

In most cases, the filtering elements consist of so-called "sleeves" or alternatively "cartridges".

These filtering stations are also provided with special cleaning systems of the filtering elements adapted to intervene periodically to detach the retained dust from the filtering elements.

One particular type of such cleaning devices involves the injection of a pulse of compressed air into the filtering elements, by means of the action of electrically-operated or pneumatically-operated valves mounted side by side on a compressed air storage tank.

The injected compressed air operates in the opposite way with respect to the normal flow of sucked air to be purified and causes shaking or vibration of the filtering elements, inducing precipitation of dust deposited on the outer surface of the filtering elements themselves.

Precipitated dust is then collected to be recovered or discarded.

There are different types of pulse valves that distinguish themselves by operation, size and type of installation with respect to the tank of compressed air.

For example, valves are known provided with a threaded or flanged coupling which can be coupled to a complementary threaded socket or to a corresponding flange made projecting from the external surface of the compressed air tank, respectively, where an air outlet hole is located. Document IT 2022 0000 0960 A1 discloses for instance a fixing system for valves for cleaning industrial filters to compressed art tanks or pipes.

Such valves, however, are not without their drawbacks, as their use necessarily provides for a special connection made directly on the tank where the compressed air outlet is located. Such a connection must be properly conformed and associated tightly with the tank, e.g., by welding.

Therefore, the use of such valves necessarily involves additional machining on the tank, which results in an increase in overall construction time and cost. Also known are the so-called "built-in" valves that, instead of being connected to the tank by means of a flanged or threaded coupling, pass through the tank itself by actually being part thereof.

Built-in valves particularly comprise a valve body which houses the actual valve element consisting, e.g., of a diaphragm solenoid valve, and which is associated with the tank where a first hole is located.

In particular, the valve body is provided with one or more inlet openings of the compressed air coming from the tank and with an outlet port of the compressed air.

The valve element is adapted to control the flow of air from the inlet openings towards the outlet port.

In addition, the built-in valves comprise a compressed air outlet duct, conventionally known as a "firing duct" which, when installed, runs transversely through the tank.

The firing duct is provided with a first inlet end of the compressed air associable, e.g., by screwing, with the outlet port of the valve body, where the first hole on the tank is located, and with a second outlet end of the compressed air which flows through a second hole on the tank, diametrically opposite, and which is connectable to the filtering elements of the dust suppression system.

The valve element, then, is electrically controlled to make the injection of compressed air from the tank, through the inlet openings on the valve body, through the first end of the firing duct, to the second end and towards the filtering elements.

The use of such built-in valves has, however, some drawbacks.

In fact, the compressed air tank commonly has an elongated tubular shape with a circular cross-section and, for the installation of each valve, two diametrically opposite holes must be drilled thereon to allow the firing port of the valve to be inserted.

The valve is then attached to the tank by means of a fitting element inserted around the second end of the firing duct and positioned in contact with the outer surface of the tank, called the "saddle".

A ring nut screwable onto a threaded stretch of the second end of the firing duct then allows the fitting element and the valve body to be clamped onto the surface of the tank, where the openings are located.

Appropriate seals are positioned between the valve body and the tank and between the fitting element and the tank.

Therefore, the use of such valves necessarily involves the drilling of two holes on the tank and a complex assembly procedure, resulting in an overall construction time and cost that is far from negligible.

In addition, once air is brought under pressure within the tank and while the valve is in use, the openings made generate an imbalance of the balances between the pressure forces exerted on the inner surface and the resistance opposed by the wall of the tank itself.

This imbalance leads to ovality of the tank section, which is then flattened along the longitudinal axis of the valve, where the openings are located, and enlarged along a direction perpendicular to such an axis. This ovality, moreover, is all the more pronounced the thinner the thickness of the tank.

As a result, it suffers greater structural stress for the same amount of pressure. In fact, the presence of two holes implies the removal of more material and, therefore, less resistance to mechanical stress.

To overcome this drawback, it is known to insert a bar made from metal or other material with a variable cross-section inside the tank which, when placed with the ends in the proximity of the holes and along the direction of tank crushing, opposes the ovality of the tank itself.

However, normally the space available to operate is very small and the area inside the tank where to attach the bars poorly accessible, leading to further complication of the valve installation process.

### Description of the Invention

The main aim of the present invention is to devise a fixing system for valves for cleaning industrial filters which allows the assembly procedure to the compressed air tank to be simplified, thereby significantly reducing the overall manufacturing time and cost.

Another object of the present invention is to devise a fixing system for valves for cleaning industrial filters which allows significantly reducing the amount of machining operations required on the tank for valve installation, as well as the overall materials used, thus leading to significant savings in terms of energy and raw materials, and avoiding nondestructive testing on the attachment welds as required by the directives/regulations for tanks under pressure.

Another object of the present invention is to devise a fixing system for valves for cleaning industrial filters which allows ovality to be minimized so as not to affect the proper operation thereof, while avoiding the use of internal reinforcements. Another object of the present invention is to devise a fixing system for valves for cleaning industrial filters which allows the aforementioned drawbacks of the prior art to be overcome within the framework of a simple, rational, easy and effective to use as well as cost-effective solution.

The aforementioned objects are achieved by this fixing system for valves for cleaning industrial filters according to the characteristics described in claim 1.

### Brief Description of the Drawings

Other characteristics and advantages of the present invention will become more apparent from the description of a preferred, but not exclusive, embodiment of a fixing system for valves for cleaning industrial filters, illustrated by way of an indicative, yet non-limiting example in the accompanying tables of drawings in which:

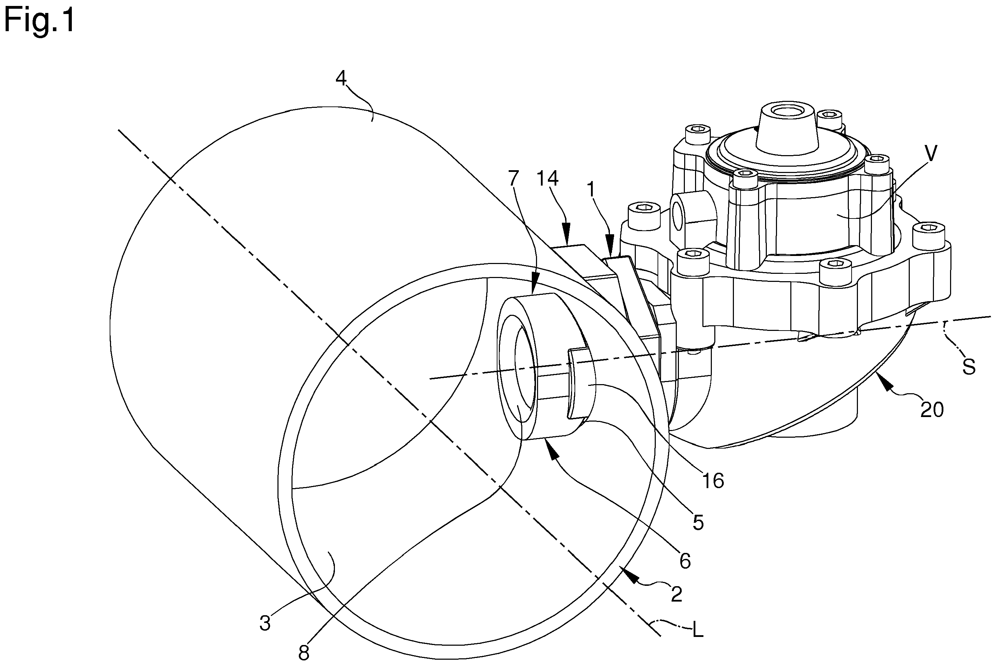

Figure 1 is an axonometric view of a valve system provided with a fixing system according to the invention;

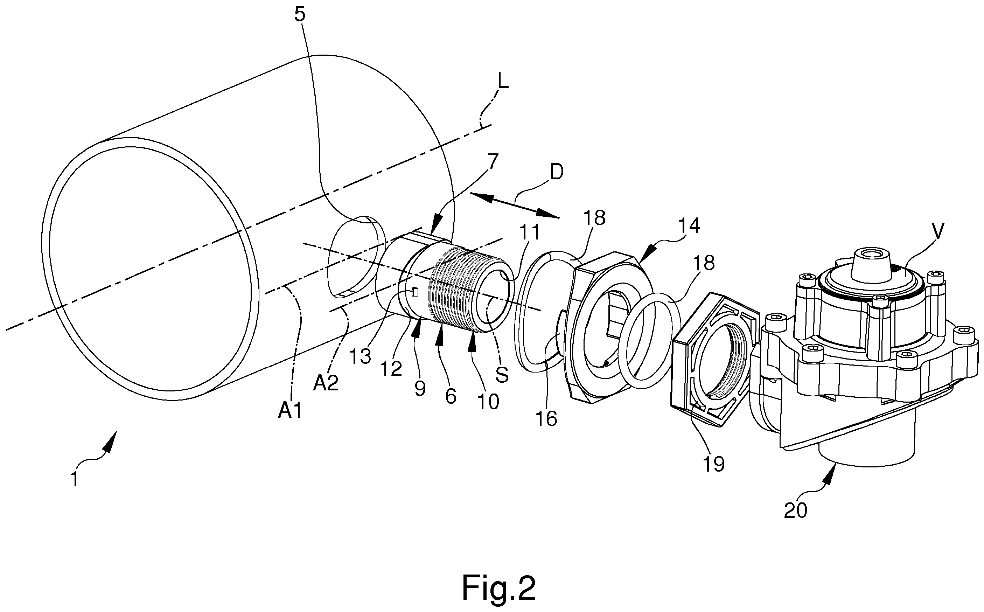

Figure 2 is an exploded axonometric view of the fixing system according to the invention;

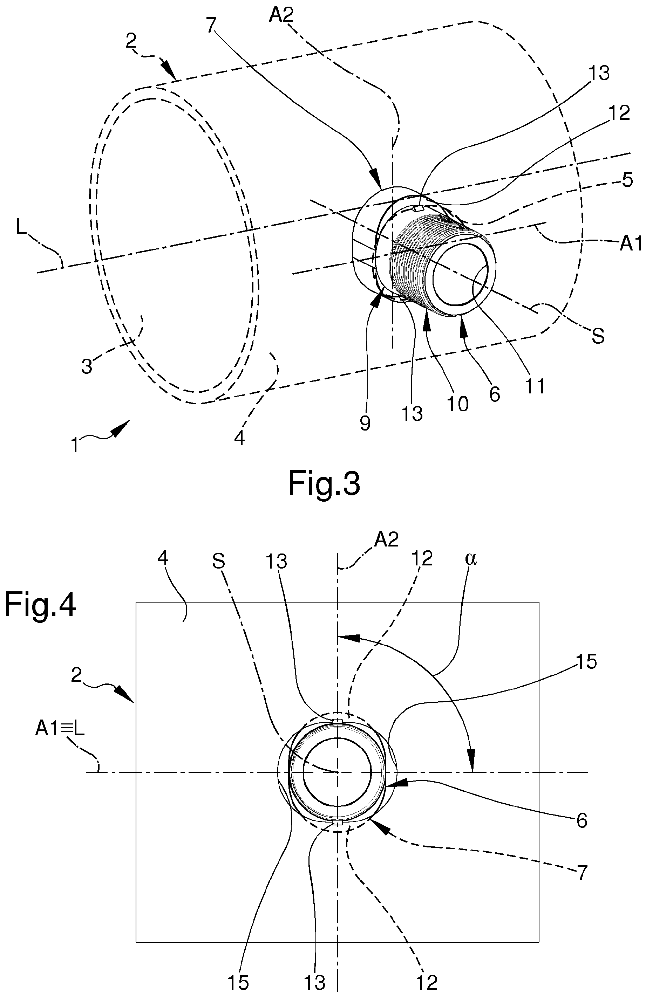

Figures 3 and 4 are axonometric and front views of the fitting body according to the invention associated with the tank, in a constrained position;

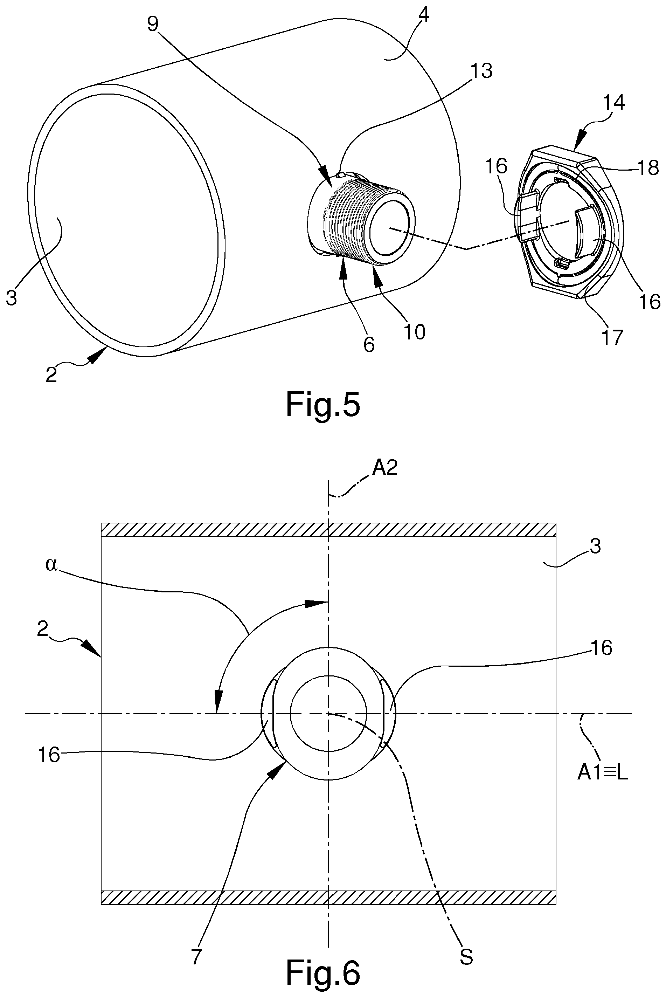

Figure 5 is an axonometric view of the fixing system in an assembly phase of the flange body;
Figure 6 is a sectional view of the fixing system, from inside the tank.

### Embodiments of the Invention

With particular reference to these figures, reference numeral 1 globally denotes a fixing system for valves for cleaning industrial filters.

In detail, the fixing system 1 can be used to attach a valve device V with which a filtering element to be cleaned is associable, not shown in detail in the figures. The valve device V, of a type known to the technician in the field, adjusts the flow of compressed gas towards the filtering element and is used for the controlled injection of a pulse of compressed air thereon.

The fixing system 1 according to the invention comprises at least one tank 2 for the storage of a compressed gas. In detail, the compressed gas is compressed air. The tank 2 comprises an inner surface 3 and an outer surface 4.

The tank 2 is provided with at least one outlet opening 5 for the compressed gas. Specifically, the tank 2 comprises only one outlet opening 5 for each valve device V.

The outlet opening 5 has an elongated conformation along at least a first axis A1. In detail, it should be specified that the expression "elongated conformation along at least an axis" means a shape that is not circular, curvilinear or even polygonal, wherein the perimeter points are arranged at different distances from the center. In this sense, therefore, the outlet opening 5 may have, e.g., an oval, rectangular, and even square conformation.

The tank 2 has a tubular conformation developing along a relevant longitudinal axis L and, in accordance with a preferred embodiment, the first axis A1 is substantially parallel to the longitudinal axis L. It cannot, however, be ruled out that the first axis A1 may be transverse to the longitudinal axis L of the tank 2. Conveniently, the outlet opening 5 has a substantially symmetrical conformation with respect to a plane orthogonal to the first axis A1.

Still with reference to the embodiment shown in the figures, the outlet opening 5 has a substantially ellipsoidal conformation, where the major axis of the ellipse coincides with the first axis A1.

The fixing system 1 also comprises at least one fitting body 6 developing along an axis of development S.

The fitting body 6 is partly insertable into the tank 2 through the outlet opening 5 and is connectable to a valve device V for cleaning industrial filters.

For this purpose, the fitting body 6 is provided with:
- an insertion portion 7 insertable through the outlet opening 5 and defining an inlet port 8 for the compressed gas; and
- a threaded portion 10 defining an outlet port 11 for the compressed gas and adapted to receive the valve device V.

The inlet port 8 and the outlet port 11 are aligned with each other along the axis of development S.

The insertion portion 7 has, in turn, an elongated conformation along at least a second axis A2 substantially perpendicular to the axis of development S.

Similar to what has been reported with reference to the outlet opening 5, the insertion portion 7 also has a non-circular, curvilinear, or even polygonal shape wherein the perimeter points are arranged at different distances from the center of the same. The insertion portion 7 can also have, e.g., an oval, rectangular and even square shape.

Preferably, the insertion portion 7 has a substantially ellipsoidal conformation, where the major axis of the ellipse coincides with the second axis A2.

In accordance with the preferred embodiment shown in the figures, the insertion portion 7 has a conformation which is substantially complementary to the outlet opening 5.

The central portion 9 and the threaded portion 10, on the other hand, have a circular cross-section. Furthermore, with reference to the embodiment shown in the figures, at least the central portion 9 has a diameter substantially equal to the minor axis of the ellipse defined by the insertion portion 7.

The fitting body 6 is symmetrical with respect to at least one median plane which is orthogonal to the second axis A2 and running through the axis of development S.

The fitting body 6 is positionable with respect to the tank 2 between a free position and a constrained position.

In the free position, the second axis A2 is substantially parallel to the first axis A1 and the fitting body 6 is free to move through the outlet opening 5 along a direction of sliding D substantially parallel to the axis of development S.

In actual facts, in the free position, the fitting body 6 is insertable into/extractable from the tank 2 through the outlet opening 5.

In the constrained position, however, the insertion portion 7 is within the tank 2, the fitting body 6 is rotated around the axis of development S by a predefined angle of rotation α and the second axis A2 is transverse to the first axis A1. Specifically, in the constrained position, the fitting body 6 is rotated around the axis of development S by an angle of rotation α substantially equal to 90° and, consequently, the second axis A2 is substantially orthogonal to the first axis A1. In such a position, moreover, the insertion portion 7 operates in conjunction with the tank 2 so as to prevent the fitting body 6 from being extracted from the tank. In the constrained position, therefore, the fitting body 6 is anchored to the tank 2. Conveniently, the insertion portion 7 comprises at least one stopping surface 12 adapted, in the constrained position, to contact the inner surface 3 of the tank 2. The stopping surface 12 prevents the fitting body 6 from sliding outwards from the tank 2, in the constrained position.

Advantageously, the stopping surface 12 has a conformation which is substantially complementary to the inner surface 3 and is configured, in the constrained position, to adhere to the inner surface itself.

In actual facts, the stopping surface 12 has a convex conformation.

The stopping surface 12 allows optimal adhesion of the insertion portion 7 to the tank 2 and enables better distribution of the forces during use.

Specifically, the insertion portion 7 comprises a pair of stopping surfaces 12, arranged on opposite sides from the central portion 9.

In accordance with the preferred embodiment of the present invention, the fitting body 6 also comprises a central portion 9, placed between the insertion portion 7 and the threaded portion 10.

Advantageously, the central portion 9 is provided with retaining means 13 adapted to retain the fitting body 6 to the tank 2. In the constrained position, the insertion portion 7 and the retaining means 13 are configured to operate in conjunction with the tank 2 to prevent the fitting body 6 from moving along the direction of sliding D in both ways.

In other words, while the insertion portion 7 prevents the fitting body 6 from being extracted from the tank 2, the retaining means 13 prevent it from dropping within the tank itself.

The retaining means 13 comprise at least one pair of retaining elements 13 protruding from the central portion 9 wherein, in the constrained position, the retaining elements 13 are adapted to contact the outer surface 4.

The retaining elements 13 prevent the fitting body 6 from sliding towards the inside of the tank 2 in the constrained position.

Advantageously, the retaining elements 13 are defined on opposite sides to the central portion 9 and are aligned with each other along a direction substantially parallel to the second axis A2.

The fixing system 1 then comprises at least one flange body 14 which can be installed around the fitting body 6, with the latter in the constrained position, and provided with securing means 16 adapted to prevent the fitting body 6 from rotating around the axis of development S.

The flange body 14 thus prevents the fitting body 6 from rotating and arranging itself in the free position, thus preventing it from being accidentally extracted from the tank 2 during both assembly and use.

In addition, the securing means 16 also prevent the fitting body 6 from carrying out a shifting movement parallel to the first axis A1.

In fact, in the constrained position, the special arrangement of the insertion portion 7 with respect to the tank 2 causes the outlet opening 5 to define, with the fitting body 6, at least one pair of gaps 15. The securing means 16 conveniently comprise at least one pair of securing elements 16, each adapted to fit to size into a respective gap 15.

It cannot, however, be ruled out that depending on the conformation of the insertion portion 7 and of the outlet opening 5 and of the position of the fitting body 6 with respect to the latter, the number of gaps 15 may be of different types and, consequently, the number of securing elements 16 as well.

Conveniently, the flange body 14 comprises a contact surface 17 having a substantially complementary conformation to the outer surface 4 and configured to adhere to the outer surface itself.

Specifically, the contact surface 17 has a concave development.

The securing elements 16 are associated with the contact surface 17. In detail, the securing elements 16 protrude from the contact surface 17.

The fixing system 1 also comprises sealing means 18 positioned between at least the flange body 14 and the tank 2.

In detail, the sealing means 18 comprise at least one seal of the type of an O-ring. The fixing system 1 may also comprise a fixing body 19 screwable onto part of the threaded portion 10 and adapted to attach the flange body 14 to the tank 2. The fixing body 19 has the function of tightening the flange body 14 on the tank 2, thus preventing it from accidentally slipping off the gaps 15.

The fixing body 19 has the function of firmly fixing the whole fixing system 1 prior to the connection with the valve device V.

Alternatively, the fixing system 1 can be without the fixing body 19 and, in that case, the valve device V is further configured to fix the flange body 14 to the tank 2.

Conveniently, the fixing system 1 also comprises sealing means 18 positioned between the fixing body 19 and the flange body 14.

According to a further aspect, the present invention also relates to a valve system 20 for cleaning industrial filters.

The valve system 20 according to the invention comprises at least one fixing system 1 according to one or more of the previously described embodiments and a valve device V for cleaning industrial filters, screwed onto the threaded portion 10.

It has in practice been ascertained that the described invention achieves the intended objects, and in particular, the fact is emphasized that the fixing system according to the invention for valves for cleaning industrial filters allows simplifying the assembly procedure to the tank of compressed air, thus significantly reducing the overall manufacturing time and cost.

In addition, this fixing system allows significantly reducing the amount of machining operation required on the tank for valve installation, as well as the overall materials used, thus leading to significant energy and raw material savings and avoiding nondestructive testing on the attachment welds as required by the directives/regulations for tanks under pressure.

Following the manufacture of the outlet opening, in fact, the fixing system involves only the assembly of the relevant components and does not require any further complex machining operations on the tank itself.

Finally, this fixing system makes it possible to minimize ovality so as not to impair proper operation, while avoiding the use of internal reinforcements. In fact, this fixing system provides only one outlet opening, of minimum size, for each valve device.

## Claims

1. Fixing system (1) for valves for cleaning industrial filters comprising:
- at least one tank (2) for the storage of a compressed gas provided with at least one outlet opening (5) for said compressed gas, wherein said outlet opening (5) has an elongated conformation along at least a first axis (A1);
- at least one fitting body (6) developing along an axis of development (S), insertable into part of said tank (2) through said outlet opening (5) and connectable to a valve device (V) for cleaning industrial filters, said fitting body (6) being provided with:
- an insertion portion (7) insertable through said outlet opening (5) and defining an inlet port (8) for said compressed gas, wherein said insertion portion (7) has an elongated conformation along at least a second axis (A2) substantially perpendicular to said axis of development (S); and
- a threaded portion (10) defining an outlet port (11) for said compressed gas and adapted to receive said valve device (V);
wherein said fitting body (6) is positionable with respect to said tank (2) between a free position, wherein said second axis (A2) is substantially parallel to said first axis (A1) and said fitting body (6) is free to move through said outlet opening (5) along a direction of sliding (D) substantially parallel to said axis of development (S), and a constrained position, wherein said insertion portion (7) is within said tank (2), said fitting body (6) is rotated around said axis of development (S) by a predefined angle of rotation (α) and said second axis (A2) is transverse to said first axis (A1) and wherein said insertion portion (7) operates in conjunction with said tank (2) to prevent said fitting body (6) from being pulled out of said tank (2);
- at least one flange body (14) which can be installed around said fitting body (6), with the latter in said constrained position, and provided with securing means (16) adapted to prevent said fitting body (6) from rotating around said axis of development (S).

2. Fixing system (1) according to claim 1, **characterized by** the fact that said fitting body (6) comprises a central portion (9) placed between said insertion portion (7) and said threaded portion (10) and provided with retaining means (13) adapted to retain said fitting body (6) to said tank (2), in said constrained position, said insertion portion (7) and said retaining means (13) being configured to operate in conjunction with said tank (2) to prevent said fitting body (6) from moving along said direction of sliding (D) in both ways.

3. Fixing system (1) according to one or more of the preceding claims, **characterized by** the fact that said tank (2) has a tubular conformation developing along a relevant longitudinal axis (L), said first axis (A1) being substantially parallel to said longitudinal axis (L).

4. Fixing system (1) according to one or more of the preceding claims, **characterized by** the fact that said outlet opening (5) has a substantially symmetrical conformation with respect to a plane orthogonal to said first axis (A1).

5. Fixing system (1) according to one or more of the preceding claims, **characterized by** the fact that said outlet opening (5) has a substantially ellipsoidal conformation.

6. Fixing system (1) according to one or more of the preceding claims, **characterized by** the fact that said insertion portion (7) has a conformation substantially complementary to said outlet opening (5).

7. Fixing system (1) according to one or more of the preceding claims, **characterized by** the fact that said tank (2) comprises an inner surface (3) and an outer surface (4) and by the fact that said insertion portion (7) comprises at least one stopping surface (12) adapted, in said constrained position, to contact said inner surface (3).

8. Fixing system (1) according to one or more of the preceding claims, **characterized by** the fact that said stopping surface (12) has a conformation substantially complementary to said inner surface (3) and is configured, in said constrained position, to adhere to said inner surface itself.

9. Fixing system (1) according to one or more of the preceding claims, **characterized by** the fact that said retaining means (13) comprise at least one pair of retaining elements (13) protruding from said central portion (9) wherein, in said constrained position, said retaining elements (13) are adapted to contact said outer surface (4).

10. Fixing system (1) according to one or more of the preceding claims, **characterized by** the fact that said retaining elements (13) are defined on opposite sides to said central portion (9) and are aligned with each other along a direction substantially parallel to said second axis (A2).

11. Fixing system (1) according to one or more of the preceding claims, **characterized by** the fact that in said constrained position, said outlet opening (5) defines, with said fitting body (6), at least one pair of gaps (15) and by the fact that said securing means (16) comprise at least one pair of securing elements (16), each adapted to fit to size into a respective gap (15).

12. Fixing system (1) according to one or more of the preceding claims, **characterized by** the fact that said flange body (14) comprises a contact surface (17) having a substantially complementary conformation to said outer surface (4) and configured to adhere to said outer surface itself, said securing elements (16) being associated with said contact surface (17).

13. Fixing system (1) according to one or more of the preceding claims, **characterized by** the fact that it comprises sealing means (18) positioned between at least said flange body and said tank (2).

14. Fixing system (1) according to one or more of the preceding claims, **characterized by** the fact that it comprises a fixing body (19) screwable onto part of said threaded portion (10) and adapted to attach said flange body (14) to said tank (2).

15. Valve system (20) for cleaning industrial filters **characterized by** the fact that it comprises at least one fixing system (1) according to one or more of the preceding claims and a valve device (V) for cleaning industrial filters, screwed onto said threaded portion (10).

## Patentansprüche

1. Befestigungssystem (1) für Ventile zur Reinigung industrieller Filter, umfassend:
- mindestens einen Tank (2) zur Speicherung eines komprimierten Gases, der mit mindestens einer Auslassöffnung (5) für das komprimierte Gas versehen ist, wobei die Auslassöffnung (5) eine längliche Form entlang mindestens einer ersten Achse (A1) aufweist;
- mindestens einen Befestigungskörper (6), der sich entlang einer Erstreckungsachse (S) erstreckt, durch die Auslassöffnung (5) in einen Teil des Tanks (2) einsetzbar ist und mit einer Ventilvorrichtung (V) zum Reinigen industrieller Filter verbindbar ist, wobei der Befestigungskörper (6) versehen ist mit:
- einem Einführungsabschnitt (7), der durch die Auslassöffnung (5) einführbar ist und eine Einlassöffnung (8) für das komprimierte Gas definiert, wobei der Einführungsabschnitt (7) eine längliche Form entlang mindestens einer zweiten Achse (A2) aufweist, die im Wesentlichen senkrecht zu der Erstreckungsachse (S) ist; und
- einem Gewindeabschnitt (10), der eine Auslassöffnung (11) für das komprimierte Gas definiert und zur Aufnahme der Ventilvorrichtung (V) ausgelegt ist;
wobei der Befestigungskörper (6) in Bezug auf den Tank (2) zwischen einer freien Position, in der die zweite Achse (A2) im Wesentlichen parallel zu der ersten Achse (A1) ist und der Befestigungskörper (6) sich durch die Auslassöffnung (5) entlang einer Gleitrichtung (D) frei bewegen kann, die im Wesentlichen parallel zu der Erstreckungsachse (S) ist, und einer eingeschränkten Position positionierbar ist, in der sich der Einführungsabschnitt (7) innerhalb des Tanks (2) befindet, der Befestigungskörper (6) um einen vorgegebenen Drehwinkel (α) um die Erstreckungsachse (S) gedreht ist und die zweite Achse (A2) quer zu der ersten Achse (A1) verläuft, und wobei der Einführungsabschnitt (7) mit dem Tank (2) zusammenwirkt, um zu verhindern, dass der Befestigungskörper (6) aus dem Tank (2) herausgezogen wird;
- mindestens einen Flanschkörper (14), der um den Befestigungskörper (6) herum installiert werden kann, wobei sich dieser in der eingeschränkten Position befindet und dieser mit Sicherungsmitteln (16) versehen ist, die ausgelegt sind, zu verhindern, dass sich der Befestigungskörper (6) um die Erstreckungsachse (S) dreht.

2. Befestigungssystem (1) nach Anspruch 1, **dadurch gekennzeichnet, dass** der Befestigungskörper (6) einen mittleren Abschnitt (9) aufweist, der zwischen dem Einführungsabschnitt (7) und dem Gewindeabschnitt (10) angeordnet ist und mit Haltemitteln (13) versehen ist, die ausgelegt sind, den Befestigungskörper (6) in der eingeschränkten Position an dem Tank (2) zu halten, wobei der Einführungsabschnitt (7) und die Haltemittel (13) ausgebildet sind, mit dem Tank (2) zusammenzuwirken, um zu verhindern, dass sich der Befestigungskörper (6) in beiden Richtungen entlang der Gleitrichtung (D) bewegt.

3. Befestigungssystem (1) nach einem oder mehreren der vorhergehenden Ansprüche, **dadurch gekennzeichnet, dass** der Tank (2) eine rohrförmige Form aufweist, die sich entlang einer relevanten Längsachse (L) erstreckt, wobei die erste Achse (A1) im Wesentlichen parallel zu der Längsachse (L) verläuft.

4. Befestigungssystem (1) nach einem oder mehreren der vorhergehenden Ansprüche, **dadurch gekennzeichnet, dass** die Auslassöffnung (5) eine im Wesentlichen symmetrische Form in Bezug auf eine Ebene aufweist, die orthogonal zu der ersten Achse (A1) verläuft.

5. Befestigungssystem (1) nach einem oder mehreren der vorhergehenden Ansprüche, **dadurch gekennzeichnet, dass** die Auslassöffnung (5) eine im Wesentlichen ellipsoide Form aufweist.

6. Befestigungssystem (1) nach einem oder mehreren der vorhergehenden Ansprüche, **dadurch gekennzeichnet, dass** der Einführungsabschnitt (7) eine Form aufweist, die im Wesentlichen komplementär zu der Auslassöffnung (5) ist.

7. Befestigungssystem (1) nach einem oder mehreren der vorhergehenden Ansprüche, **dadurch gekennzeichnet, dass** der Tank (2) eine Innenfläche (3) und eine Außenfläche (4) aufweist und dadurch, dass der Einführungsabschnitt (7) mindestens eine Anschlagfläche (12) aufweist, die ausgelegt ist, in der eingeschränkten Position mit der Innenfläche (3) in Kontakt zu treten.

8. Befestigungssystem (1) nach einem oder mehreren der vorhergehenden Ansprüche, **dadurch gekennzeichnet, dass** die Anschlagfläche (12) eine Form aufweist, die im Wesentlichen komplementär zu der Innenfläche (3) ist, und ausgebildet ist, in der eingeschränkten Position an der Innenfläche selbst anzuliegen.

9. Befestigungssystem (1) nach einem oder mehreren der vorhergehenden Ansprüche, **dadurch gekennzeichnet, dass** die Haltemittel (13) mindestens ein Paar Halteelemente (13) umfassen, die aus dem mittleren Abschnitt (9) herausragen, wobei die Halteelemente (13) ausgelegt sind, in der eingeschränkten Position mit der Außenfläche (4) in Kontakt zu treten.

10. Befestigungssystem (1) nach einem oder mehreren der vorhergehenden Ansprüche, **dadurch gekennzeichnet, dass** die Halteelemente (13) auf gegenüberliegenden Seiten des mittleren Abschnitts (9) definiert und entlang einer Richtung, die im Wesentlichen parallel zu der zweiten Achse (A2) verläuft, zueinander ausgerichtet sind.

11. Befestigungssystem (1) nach einem oder mehreren der vorhergehenden Ansprüche, **dadurch gekennzeichnet, dass** in der eingeschränkten Position die Auslassöffnung (5) mit dem Befestigungskörper (6) mindestens ein Paar Zwischenräume (15) definiert und dadurch, dass die Sicherungsmittel (16) mindestens ein Paar Sicherungselemente (16) umfassen, die jeweils ausgelegt sind, passgenau in einen entsprechenden Zwischenraum (15) zu passen.

12. Befestigungssystem (1) nach einem oder mehreren der vorhergehenden Ansprüche, **dadurch gekennzeichnet, dass** der Flanschkörper (14) eine Kontaktfläche (17) aufweist, die eine im Wesentlichen komplementäre Form zu der Außenfläche (4) hat und ausgebildet ist, an der Außenfläche selbst anzuliegen, wobei die Sicherungselemente (16) mit der Kontaktfläche (17) verbunden sind.

13. Befestigungssystem (1) nach einem oder mehreren der vorhergehenden Ansprüche, **dadurch gekennzeichnet, dass** es Dichtungsmittel (18) umfasst, die zumindest zwischen dem Flanschkörper und dem Tank (2) angeordnet sind.

14. Befestigungssystem (1) nach einem oder mehreren der vorhergehenden Ansprüche, **dadurch gekennzeichnet, dass** es einen Befestigungskörper (19) umfasst, der auf einen Teil des Gewindeabschnitts (10) aufschraubbar und ausgelegt ist, den Flanschkörper (14) an dem Tank (2) zu befestigen.

15. Ventilsystem (20) zum Reinigen industrieller Filter, **dadurch gekennzeichnet, dass** es mindestens ein Befestigungssystem (1) nach einem oder mehreren der vorhergehenden Ansprüche und eine Ventilvorrichtung (V) zum Reinigen industrieller Filter umfasst, die auf den Gewindeabschnitt (10) geschraubt ist.

## Revendications

1. - Système de fixation (1) pour soupapes de nettoyage de filtres industriels comprenant :
- au moins un réservoir (2) pour le stockage d'un gaz comprimé comportant au moins une ouverture de sortie (5) pour ledit gaz comprimé, ladite ouverture de sortie (5) ayant une conformation allongée le long d'au moins un premier axe (A1) ;
- au moins un corps d'ajustement (6) se développant le long d'un axe de développement (S), apte à être introduit dans une partie dudit réservoir (2) à travers ladite ouverture de sortie (5) et apte à être relié à un dispositif de soupape (V) pour le nettoyage de filtres industriels, ledit corps d'ajustement (6) comportant:
- une partie d'introduction (7) apte à être introduite à travers ladite ouverture de sortie (5) et définissant un orifice d'entrée (8) pour ledit gaz comprimé, ladite partie d'introduction (7) ayant une conformation allongée le long d'au moins un second axe (A2) sensiblement perpendiculaire audit axe de développement (S) ; et
- une partie filetée (10) définissant un orifice de sortie (11) pour ledit gaz comprimé et apte à recevoir ledit dispositif de soupape (V) ;
dans lequel ledit corps d'ajustement (6) est apte à être positionné par rapport audit réservoir (2) entre une position libre, dans laquelle ledit second axe (A2) est sensiblement parallèle audit premier axe (A1) et ledit corps d'ajustement (6) est libre de se déplacer à travers ladite ouverture de sortie (5) le long d'une direction de coulissement (D) sensiblement parallèle audit axe de développement (S), et une position contrainte, dans laquelle ladite partie d'introduction (7) est à l'intérieur dudit réservoir (2), ledit corps d'ajustement (6) est tourné autour dudit axe de développement (S) d'un angle de rotation prédéfini (α) et ledit second axe (A2) est transversal audit premier axe (A1) et dans laquelle ladite partie d'introduction (7) fonctionne conjointement avec ledit réservoir (2) pour empêcher ledit corps d'ajustement (6) d'être tiré hors dudit réservoir (2) ;
- au moins un corps de bride (14) qui peut être installé autour dudit corps d'ajustement (6), ce dernier étant dans ladite position contrainte, et comportant des moyens de fixation (16) aptes à empêcher ledit corps d'ajustement (6) de tourner autour dudit axe de développement (S).

2. - Système de fixation (1) selon la revendication 1, **caractérisé par le fait que** ledit corps d'ajustement (6) comprend une partie centrale (9) placée entre ladite partie d'introduction (7) et ladite partie filetée (10) et comportant des moyens de retenue (13) aptes à retenir ledit corps d'ajustement (6) sur ledit réservoir (2), dans ladite position contrainte, ladite partie d'introduction (7) et lesdits moyens de retenue (13) étant configurés pour fonctionner conjointement avec ledit réservoir (2) pour empêcher ledit corps d'ajustement (6) de se déplacer le long de ladite direction de coulissement (D) dans les deux sens.

3. - Système de fixation (1) selon l'une ou plusieurs des revendications précédentes, **caractérisé par le fait que** ledit réservoir (2) a une conformation tubulaire se développant le long d'un axe longitudinal (L) approprié, ledit premier axe (A1) étant sensiblement parallèle audit axe longitudinal (L).

4. - Système de fixation (1) selon l'une ou plusieurs des revendications précédentes, **caractérisé par le fait que** ladite ouverture de sortie (5) a une conformation sensiblement symétrique par rapport à un plan orthogonal audit premier axe (A1).

5. - Système de fixation (1) selon l'une ou plusieurs des revendications précédentes, **caractérisé par le fait que** ladite ouverture de sortie (5) a une conformation sensiblement ellipsoïdale.

6. - Système de fixation (1) selon l'une ou plusieurs des revendications précédentes, **caractérisé par le fait que** ladite partie d'introduction (7) a une conformation sensiblement complémentaire de ladite ouverture de sortie (5).

7. - Système de fixation (1) selon l'une ou plusieurs des revendications précédentes, **caractérisé par le fait que** ledit réservoir (2) comprend une surface interne (3) et une surface externe (4) et **par le fait que** ladite partie d'introduction (7) comprend au moins une surface d'arrêt (12) apte, dans ladite position contrainte, à venir en contact avec ladite surface interne (3).

8. - Système de fixation (1) selon l'une ou plusieurs des revendications précédentes, **caractérisé par le fait que** ladite surface d'arrêt (12) a une conformation sensiblement complémentaire de ladite surface interne (3) et est configurée, dans ladite position contrainte, pour adhérer à ladite surface interne elle-même.

9. - Système de fixation (1) selon l'une ou plusieurs des revendications précédentes, **caractérisé par le fait que** lesdits moyens de retenue (13) comprennent au moins une paire d'éléments de retenue (13) faisant saillie à partir de ladite partie centrale (9), où, dans ladite position contrainte, lesdits éléments de retenue (13) sont aptes à venir en contact avec ladite surface externe (4).

10. - Système de fixation (1) selon l'une ou plusieurs des revendications précédentes, **caractérisé par le fait que** lesdits éléments de retenue (13) sont définis sur des côtés opposés à ladite partie centrale (9) et sont alignés entre eux le long d'une direction sensiblement parallèle audit second axe (A2).

11. - Système de fixation (1) selon l'une ou plusieurs des revendications précédentes, **caractérisé par le fait que**, dans ladite position contrainte, ladite ouverture de sortie (5) définit, avec ledit corps d'ajustement (6), au moins une paire d'espacements (15) et **par le fait que** lesdits moyens de fixation (16) comprennent au moins une paire d'éléments de fixation (16), chacun apte à s'adapter à la taille dans un espacement respectif (15).

12. - Système de fixation (1) selon l'une ou plusieurs des revendications précédentes, **caractérisé par le fait que** ledit corps de bride (14) comprend une surface de contact (17) ayant une conformation sensiblement complémentaire de ladite surface externe (4) et configurée pour adhérer à ladite surface externe elle-même, lesdits éléments de fixation (16) étant associés à ladite surface de contact (17).

13. - Système de fixation (1) selon l'une ou plusieurs des revendications précédentes, **caractérisé par le fait qu'**il comprend des moyens d'étanchéité (18) positionnés entre au moins ledit corps de bride et ledit réservoir (2).

14. - Système de fixation (1) selon l'une ou plusieurs des revendications précédentes, **caractérisé par le fait qu'**il comprend un corps de fixation (19) apte à être vissé sur une partie de ladite partie filetée (10) et apte à fixer ledit corps de bride (14) audit réservoir (2).

15. - Système à soupape (20) pour le nettoyage de filtres industriels, **caractérisé par le fait qu'**il comprend au moins un système de fixation (1) selon l'une ou plusieurs des revendications précédentes et un dispositif de soupape (V) pour le nettoyage de filtres industriels, vissé sur ladite partie filetée (10).
